# EUROPEAN PATENT APPLICATION

(11) **EP 2 402 153 A1**
(43) Date of publication of application: **04.01.2012**
(21) Application number: 10167988.4
(22) Date of filing: 30.06.2010
(51) Int. Cl.: B32B 21/02, B32B 21/08, E04C 2/24

(54) **A panel comprising a polymeric composite layer and a method of manufacturing a panel**

(71) Applicant: Spanolux N.V. Div. Balterio, 8710 Sint-Baafs-Vijve (BE)
(72) Inventor: Vermeulen, Bruno Paul Louis, 3680, Aldeneik-Maaseik (BE)
(74) Representative: De Vries & Metman

(57) **Abstract**

A panel (1) comprises a polymeric composite layer (4) and a cover layer which is laminated to the polymeric composite layer (4), wherein the cover layer comprises a polymeric film (5).

## Description

A panel comprising a polymeric composite layer and a method of manufacturing a panel

The invention relates to a panel, in particular a floor panel, which comprises a polymeric composite layer and a cover layer which is laminated to the polymeric composite layer.

Such a panel is known in the art and includes WPC as a polymeric composite, WPC stands for wood plastic composite and is a composite of polymeric material and a natural fibre for example from any wood source. The polymeric material can be one or more polymers having a polyolefin group, such as polyethylene. Other polymeric materials include polypropylene, polyvinyl chloride (PVC), copolymer of PVC, or the like. In a known panel a cover layer for example a paper sheet including a decoration pattern, is attached to the WPC layer by means of glue. In order to achieve a high fixing quality a relatively expensive glue has to be applied.

It is an object of the present invention to provide a low-cost panel comprising a polymeric composite layer and a cover layer laminated thereto.

In order to achieve this object the cover layer comprises a polymeric film.

The advantage of the panel according to the invention is that a strong adherence can be achieved between the polymeric composite layer and the polymeric film, in particular in case of a polymeric composite layer that contains a non-polar polymer, without necessity of using expensive glue. A polymeric film appears to be more compatible to a polymeric composite layer in terms of adherence than a conventional paper sheet. One of the non-polar polymers is polypropylene, for example. In practice the polymeric film may be provided with a decoration pattern, which is printed on the film, for example. It is noted that the polymeric composite may be a mixture of one or more polymers and non-polymeric or partly polymeric material. Examples or non-polymeric or partly polymeric materials are chalk and carpet waste, jute, styrene butadiene (latex), but a lot of alternative materials are conceivable. The polymeric composite may further contain a coupling agent to improve the material cohesion. Alternative additives are elastomers or materials having a high absorption capacity of fillers. This may also improve adherence properties with the polymeric film or characteristics like UV resistance, humidity resistance and bending strength. The polymeric film may be made of a mixture of different polymers or a single polymer. Preferably, the polymer film is free of non-polymeric materials that are contained in the polymeric composite layer. In general, the polymeric composite layer may be a composite of a polymer and a non-polymer composite substance whereas the polymeric film is substantially free of this non-polymer composite substance. The composite substance may be natural or non-natural fibres, particles or the like.

The polymeric composite layer may be a WPC layer which is made of wood plastic composite (WPC) and the cover layer may be a non-MFC polymeric film.

In a practical embodiment the film has a thickness of less than 1500 µm and preferably less than 500 µm. Before laminating the film may be a continuous sheet. The polymeric film is thinner than the polymeric composite layer; in practice one can also speak about a polymeric composite core to which the polymeric film is laminated.

The polymeric film may be made of inter alia PVC, polyethylene, XPS (polystyrene), polypropylene, polyester, polypropylene, or the like. These are compatible with one or more polymers contained in several polymeric composite layer types and WPC layer types in terms of adherence. Preferably, both the polymeric composite layer and the polymeric film contain a polymer of similar type.

In a preferred embodiment the polymeric film is melted to the polymeric composite layer since this appears to create an optimal adherence between the polymeric film and the polymeric composite layer. This means that at a contact area between the polymeric and the polymeric composite layer an earlier melted portion of at least one of the polymeric film and the polymeric composite layer functions as glue. In the panel according to the invention the earlier melted portion is cured. In this case no additional glue is necessary.

In order to create a high level of wear resistance of the panel the polymeric film is covered by an ionomer resin layer, preferable selected from the group known as Surlyn®. An ionomer resin is a polymer that comprises repeat units of both electrically neutral repeating units and a fraction of ionized units. Surlyn® is a commercial thermoplastic ionomer resin that was introduced by DuPont™ in the early 1960's. Surlyn® can be used in conventional extrusion/coextrusion, blown film, cast film, and extrusion coating equipment designed for polyethylene resins. Other characteristics of Surlyn® are sealing performance, formability, clarity, oil/crease resistance, and high hot draw strength, which makes the material quite suitable for application in the field of floor panels.

The ionomer resin layer may be a sheet which is laminated to the polymeric film by means of a tie layer between the ionomer resin layer and the polymeric film, wherein the tie layer is preferably selected from the group known as Bynel®, Bynel® is a commercial adhesive resin that has been introduced by DuPont™ as well.

In the embodiments as described hereinbefore a decoration pattern such as a natural wood pattern, may be provided on the polymeric film. Alternatively, a decoration pattern is provided directly on the polymeric composite layer. In that case the polymeric film itself may be an ionomer resin film which is directly provided on the decorated polymeric composite layer or by means of a tie layer as mentioned hereinbefore.

In case of providing a decoration pattern on the polymeric film the pattern may be provided by a digitally controlled inkjet printer. Preferably, the printing process is adapted to the properties of the polymeric film. For example, the viscosity of the ink and the droplet size may be varied, or the polymeric film is prepared by a corona treatment. Alternatively, the decoration pattern may be printed in a conventional manner, for example by engraved printing.

The invention is also related to a panel, comprising a polymeric composite layer, wherein an upper face of the polymeric composite layer is provided with a decoration pattern and covered by an ionomer resin layer. In this case the ionomer resin layer may be formed of a sheet, extruded layer, or the like. In a specific embodiment the polymeric composite layer is a WPC layer made of wood plastic composite (WPC).

The panel according to the invention may be a floor panel, ceiling panel, wall panel, or the like.

The invention is also related to a method of manufacturing a laminate panel, including the steps of: providing a polymeric composite layer having an upper face which has a above its melting temperature, providing a polymeric film, placing the polymeric film on the upper face of the polymeric composite layer, and pressing the polymeric composite layer and the polymeric film together. Preferably, the temperature, pressure and time of this process is selected such that the original structure of a large part of the polymeric film substantially remains the same.

The upper face may be heated before providing the polymeric composite layer in order to prepare it for receiving the polymeric film. The heat may be created by means of infrared radiation. It is also conceivable to increase the temperature buy alternative heating means.

Alternatively, the polymeric composite layer is manufactured by melting a layer of granulate of polymeric composite and pressing the melted layer, wherein the polymeric composite layer is provided for placing the polymeric film on its upper face before the upper face is cooled down below its melting temperature. In this case it is not necessary to heat the polymeric composite layer again after having manufactured this, prior to placing the polymeric film on the upper face thereof.

The invention is also related to a method or manufacturing a panel, including the steps of melting a layer of granulate of polymeric composite, providing a polymeric layer on the upper face of the polymeric composite layer, and pressing the polymeric composite layer and the polymeric layer together. If the polymeric layer is provided in liquid phase onto the upper face it may be distributed over the surface of the polymeric composite layer and smoothen the surface. If the polymeric layer is provided in solid phase, for example a sheet or film, it will melt together with the polymeric composite layer and smoothen the surface. This is advantageous since the outer surface of a polymeric composite layer may be coarse without the polymeric layer.

The invention will hereafter be elucidated with reference to the very schematic drawing showing an embodiment the invention by way of example.

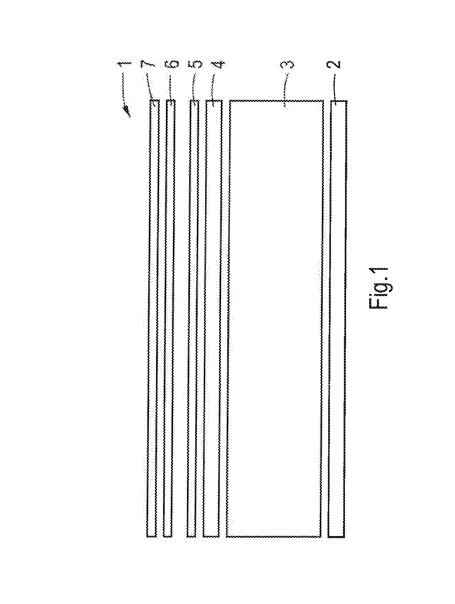

Fig. 1 is an exploded cross-sectional view of an embodiment of the panel according to the invention.

Fig. 1. shows separate layers of an embodiment of a panel 1 according to the invention. The panel 1 is a laminate which comprises several layers. The total thickness of this embodiment of the panel 1 is about 5,5 mm, but alternative sizes are possible. From the lower side to the upper side of the panel 1 of Fig. 1 one can see a lower soft layer 2 of about 1 mm, a WPC layer or core 3 of about 3 mm, an upper soft layer 4 of about 1 mm, a non-WFC polymeric film 5 of about 250 µm, a tie layer 6 of about 50 µm and an ionomer resin layer 7 of about 200 µm. The mentioned thicknesses are just examples and alternative values are possible. It is noted that instead of WPC an alternative polymeric composite may be applied. The polymeric composite may be made of a polymer and a composite substance such as waste of carpet, chalk or the like. It is also possible, for example, that the waste of carpet itself contains one or more polymers such that the polymeric composite may be made of polymer-containing waste of carpet, possibly added with one or more additional polymers. Furthermore, a coupling agent for improved cohesion may be contained in the polymeric composite. It is also noted that the non-MFC polymeric film. 5 may be replaced by a polymeric film which is substantially free of any composite substance.

The lower soft layer 2 and the upper soft layer 4 are attached at both sides of the WPC core 3 for comfort reasons. The lower and upper soft layers 2, 4 may be flexible for improvement of sound damping. Several types of soft layers 2, 4 are possible, such as foam, wood foil and the like. In the embodiment as shown in Fig. 1 the lower and upper soft layers 2, 4 are made of soft WPC.

The WPC core 3 and/or the soft WPC layers 2, 4 comprise a non-polar polymer, for example polypropylene. The non-WPC polymeric film 5 is made of polypropylene, but alternative materials are conceivable, for example PVC or polyethylene. It appears that a much stronger attachment can be realised between a non-polar WPC layer 4, in this case the upper soft WPC layer 4, and the non-WPC polymeric film 5 than between a non-polar WPC layer and a paper sheet in conventional panels including a WPC layer.

The non-WPC polymeric film 5 can be provided with a decoration pattern, for example by printing an ink pattern on the film 5.

In the embodiment of Fig. 1 the ionomer resin layer 7 forms a protective layer such as a wear-resistant top layer in conventional laminate panels. It is of course possible to apply another type of wear-resistant layer than the ionomer resin layer 7. Preferably, the ionomer resin layer 7 has a high level of transparency so as to keep a decoration pattern of the ron-WPC polymeric film 5 visible. An appropriate material is selected from the group known as Surlyn® being developed by DuPont™. Additionally, the ionomer resin layer may be covered by a polyurethane coating or the like in order to improve abrasive and scratch resistance. Such a coating may have a thickness of 5 - 30 µm, but a thinner or thicker coating is conceivable.

The tie layer 6 is applied for adhering the ionomer resin layer 7 to the non-MFC polymeric film 5. An appropriate tie layer is selected from the group known as Bynel®, being developed by DuPont™, as well.

The panel 1 as shown in Fig. 1 can be manufactured by heating an upper face of the upper soft MFC layer 4 to a temperature which is higher than its melting temperature, then placing the non-WPC polymeric film 5 on the melted upper face and pressing the non-WPC polymeric film 5 on the MFC upper layer 4. The upper face of the WPC upper layer 4 may be heated by means of infrared radiation, but alternative heating means are conceivable. It is conceivable that the entire stack of layers 5, 6, 7 are pressed to the WPC layers 2, 3, 4 simultaneously in case the stack of layers 2, 3, 4 form already a base panel. The tie layer 6 may be applied on the rion-WPCI polymeric film 5 by means of a co-extrusion process. The non-WFC polymeric film and the ionomer resin layer 7 may be supplied on rolls. Alternatively, the tie layer may be applied to the polymeric film 5 on which a decoration pattern is provided. It is also possible that during or after the process or providing a decoration pattern to the polymeric film a primer or adhering layer is provided on the polymeric film 5. In that case the layer of Bynel® can be omitted.

It is also possible to melt the non-WPC polymeric film 5 to the WPC upper layer 4 directly after manufacturing the WPC core 3 and the MPC lower and upper soft WPC layers 2, 4. The WPC layers 2, 3, 4 may be manufactured by melting layers of granulate of WPC and pressing the melted layers together. Such a method is described in WO 2008/122668. Before cooling down the WPC layers 2, 3, 4 below the melting temperature of at least the upper soft WPC layer 4 and possibly before pressing the WPC layers 2, 3, 4 together, the non-WFC polymeric film 5 can be placed onto the melted upper face of the WPC upper layer 4. It is noted that if the non-WPC polymeric film 5 is placed on a WPC layer which is still too hot, the film 5 may melt which is undesirable.

Nevertheless, in an alternative method of manufacturing a panel a polymeric film is melted on the polymeric composite layer deliberately. In this case a polymeric sheet, for example polypropylene, PVC, polyester or the like, can be supplied to the melted layer of granulate of the polymeric composite. The polymeric film melts and as a result after pressing the panel obtains a smooth surface at the side where the polymeric sheet is provided and melted. This is advantageous if the polymeric composite layer has a coarse surface due to inhomogeneous mixing of the polymer and a composite substance. Additionally, the melted polymeric layer on the polymeric composite layer may also improve the stability and stiffness of the resulting panel and further improve the adherence of another polymeric film thereon. It is also possible to provide a melted polymeric layer or film at the back side of the polymeric composite layer, which may function as a balancing layer. It is noted that instead of applying a polymeric sheet the polymeric material may be provided on the granulate of the polymeric composite by spraying it in a liquid phase. In case of applying a polymeric sheet it may have a specific weight of 10-500 g/m².

It is possible to use a press including an embossed press plate in order to create a panel 1 having an embossed upper surface. The laminating process may be continuous or discontinuous. Furthermore, the polymeric film 5 and/or the ionomer resin layer 7 may be embossed before laminating or upon laminating the layers 5, 7 to the polymeric composite layer. Embossing may be performed by using a textured calendar or by means of a textured press plate, or by means of a press plate on which a releasable textured press layer is present.

Furthermore, the panel 1 may be provided with locking means for attaching panels to each other so as to form a flooring, for example. Furthermore, the panel 1 may be provided on at least two and preferably all edges with locking means. Preferably, the locking means also include a mechanical locking system to lock the adjacent floor panels not only in a direction perpendicular to the surface of the panels, but also in a direction parallel to the surface and perpendicular to the respective side of the panel 1. However the invention is not limited thereto at all. All locking systems, including the use of a tongue and a groove as well as adhesives are encompassed by the invention.

The invention is not limited to the embodiment as described above and shown in the drawing, which can be varied in several ways without departing from the scope of the invention. For example, the upper soft layer may be eliminated such that the non-WPC polymeric film is attached directly to the WPC core. It is also possible that a very thin layer is present between the WFC core and the non-WPC polymeric film which is necessary to manufacture the WPC core but which has a thickness such that it does not adversely affect a strong adherence between the WPC core and the non-MFC polymeric film. Furthermore, an upper face of the WFC core 3 may be provided with a decoration pattern and directly covered by the ionomer resin layer 7, hence eliminating the non-WPC polymeric film 5 and the upper soft WPC layer 4. It is noted that the panel according to the invention may be flexible or stiff or between that. Similarly, the method according to the invention may lead to such a panel.

## Claims

1. A panel (1), comprising a polymeric composite layer (4) and a cover layer which is laminated to the polymeric composite layer (4), wherein the cover layer comprises a polymeric film (5).

2. A panel (1) according to claim 1, wherein the polymeric composite layer is a WFC layer (4) made of wood plastic composite (WPC) and the cover layer is a non-WFC polymeric film (5), or the polymeric composite layer is a composite of a polymer and a non-polymeric composite substance whereas the polymeric film (5) is free of said non-polymeric composite substance.

3. A panel (1) according to claim 1 or 2, wherein the polymeric film (5) has a thickness of less than 1500 µm and preferably less than 500 µm.

4. A panel (1) according to one of the preceding claims, wherein the polymeric composite layer (4) comprises a nonpolar polymer,

5. A panel (1) according to one of the preceding claims, wherein the polymeric film (5) is made of PVC, polyethylene, polypropylene, polyester, polystyrene or polypropylene.

6. A panel (1) according to one of the preceding claims, wherein the polymeric film (5) is melted to the polymeric composite layer (4).

7. A panel (1) according to one of the preceding claims, wherein the polymeric film (5) is covered by an ionomer resin layer (7), preferable selected from the group known as Surlyn®.

8. A panel (1) according to claim 7, wherein the ionomer resin layer (7) is a sheet which is laminated to the polymeric film (5) by means of a tie layer (6) between the ionomer resin layer (7) and the polymeric film (5), wherein the tie layer (6) is preferably selected from the group known as Bynel®.

9. A panel (1) according to one of the claims 1-4, wherein the polymeric film (5) is an ionomer resin film, preferable selected from the group known as Surlyn®.

10. A panel (1) according to one of the preceding claims, wherein the polymeric film (5) is provided with a decoration pattern.

11. A panel (1), comprising a polymeric composite layer (4), wherein an upper face of the polymeric composite layer (4) is provided with a decoration pattern and covered by an ionomer resin layer (7), wherein the ionomer resin layer may be covered by a polyurethane coating.

12. Method of manufacturing a laminate panel, including the steps of:
providing a polymeric composite layer (4) and having an upper face which has a temperature above its melting temperature,
providing a polymeric film (5),
placing the polymeric film (5) on the upper face of the polymeric composite layer (4), and
pressing the polymeric composite layer (4) and the polymeric film (5) together.

13. Method according to claim 12, wherein the upper face is heated before providing the polymeric composite layer (4), preferably by means of infrared radiation.

14. Method according to claim 12, wherein the polymeric composite layer (4) is manufactured by melting a layer of granulate of polymeric composite and pressing the melted layer, wherein the polymeric composite layer (4) is provided for placing the polymeric film (5) on its upper face before the upper face is cooled down below its melting temperature.

15. Method of manufacturing a panel, including the steps of:
melting a layer of granulate of a polymeric composite,
providing a polymeric layer on the upper face of the polymeric composite layer, and
pressing the polymeric composite layer and the polymeric layer together, wherein the polymeric layer is preferably a polymeric film.
